# EUROPÄISCHE PATENTANMELDUNG

(11) **EP 1 826 049 A2**
(43) Veröffentlichungstag der Anmeldung: **29.08.2007**
(21) Anmeldenummer: 07003266.9
(22) Anmeldetag: 16.02.2007
(51) Int. Cl.: B60J 7/14

(54) **Cabriolet-Fahrzeug mit einem Hardtop-Fahrzeugdach**

(30) Priorität: 27.02.2006 DE 102006009507
(71) Anmelder: Magna Car Top Systems GmbH, 74321 Bietigheim-Bissingen (DE)
(72) Erfinder: Halbweiss, Thomas, 71686 Remseck (DE); Koschien, Robert, 73760 Ostfildern (DE)

(57) **Zusammenfassung**

Ein Cabriolet-Fahrzeug weist ein zwischen einer Schließposition und einer Ablageposition verstellbares Hardtop-Fahrzeugdach mit mehreren Dachteilen auf, von denen ein hinteres Dachteil eine Heckscheibe zwischen seitlichen C-Säulen umfasst, wobei die Heckscheibe als unabhängig von dem hinteren Dachteil bewegbares Bauteil ausgebildet ist. In Ablageposition ist das Fahrzeugdach in einem heckseitigen Verdeckkasten abgelegt, der von einem aufschwenkbaren Heckdeckel zu verschließen ist. Am Heckdeckel ist auf der dem Fahrzeuginnenraum zugewandten Seite ein Hutablagedeckel gehalten, der sich in Schließposition bis in den vom Fahrzeugdach überspannten Fahrzeuginnenraum erstreckt.

## Beschreibung

Die Erfindung bezieht sich auf ein Cabriolet-Fahrzeug mit einem zwischen einer Schließposition und einer Ablageposition verstellbaren Hardtop-Fahrzeugdach mit mehreren Dachteilen nach dem Oberbegriff des Anspruches 1.

In der DE 10 2004 025 051 B4 wird ein zweiteiliges Hardtop-Fahrzeugdach mit einem vorderen und einem hinteren Dachteil beschrieben, in das eine Heckscheibe verstellbar integriert ist. Die Heckscheibe ist über eine Verstellkinematik an das vordere Dachteil gekoppelt und kann zwischen einer Normalstellung, in der die Heckscheibe in das hintere Dachteil eingefügt ist, und einer angehobenen Aufstellposition verstellt werden, in der die Heckscheibe unmittelbar oberhalb des vorderen Dachteiles abgelegt ist. Mithilfe dieser Konfiguration wird ein übereinander liegendes, flach bauendes Dachteilpaket in der Ablagestellung erreicht, in der alle Dachteile in einem heckseitigen Verdeckkasten abgelegt sind, wobei das hintere Dachteil gegensinnig und zuunterst im Dachteilpaket liegt, das vordere Dachteil mit der Dachaußenseite nach oben und die Heckscheibe auf dem vorderen Dachteil abgelegt ist. Der Verdeckkasten ist von einem Heckdeckel zu verschließen, der für die Überführungsbewegung der Dachteile von der Schließ- in die Ablageposition um eine heckseitige, quer verlaufende Schwenkachse aufgestellt wird.

Bei derartigen Fahrzeugdächern entsteht durch die Schrägstellung des hinteren Dachteiles hinter den Sitzen - unmittelbar unterhalb der Heckscheibe - ein Hutablageraum, der von einer Hutablage abgedeckt ist, die entweder fest mit dem hinteren Dachteil gekoppelt ist und demzufolge auch die Bewegung dieses Dachteils mit ausführt, oder, in aufwändigeren Ausführungen, über eine Relativkinematik entweder mit dem Fahrzeugdach oder einem karosserieseitigen Bauteil verbunden ist. Beispielhaft wird auf die DE 101 62 153 A1 verwiesen, aus der ein fest mit dem hinteren Dachteil verbundener Hutablagedeckel bekannt ist. Derartige Hutablagen schränken aber die Möglichkeiten für eine Raum sparende Stapelung in Ablageposition ein oder erfordern eine aufwändige Stellkinematik.

Der Erfindung liegt die Aufgabe zugrunde, mit einfachen konstruktiven Maßnahmen eine Raum sparende Ablage eines Hardtop-Fahrzeugdaches in einem Cabriolet-Fahrzeug zu schaffen.

Diese Aufgabe wird erfindungsgemäß mit den Merkmalen des Anspruches 1 gelöst. Die Unteransprüche geben zweckmäßige Weiterbildungen an.

Das Hardtop-Fahrzeugdach des erfindungsgemäßen Cabriolet-Fahrzeugs besitzt im hinteren Dachteil zwischen den seitlichen C-Säulen eine bewegliche Heckscheibe, die über eine Verstelleinrichtung aus der Normalposition, in der die Heckscheibe in einer gemeinsamen Ebene mit dem hinteren Dachteil liegt, in eine versetzte Aufstellposition überführbar ist, in welcher die Heckscheibe außerhalb der Ebene des hinteren Dachteils liegt. Des Weiteren ist am Heckdeckel - oder einem mit dem Heckdeckel gekoppelten Bauteil, jedoch nicht die Fahrzeugkarosserie - ein zusätzlicher Hutablagedeckel angeordnet, der sich bei geschlossenem Fahrzeugdach bis in den Fahrzeuginnenraum hinein erstreckt, welcher von dem Fahrzeugdach überspannt ist. Dieser Hutablagedeckel verläuft in Schließposition des Daches zumindest annähernd horizontal und liegt unterhalb der unteren Kante der Heckscheibe.

Diese Konfiguration weist verschiedene Vorteile auf. Zum einen wird durch die Aufstellbewegung der Heckscheibe in Bezug auf die Ebene des hinteren Dachteils Platz geschaffen für das Aufschwenken des Heckdeckels zum Öffnen des Verdeckkastens, in den hinein das Fahrzeugdach zum Erreichen der Cabriolet- bzw. Öffnungsposition abgelegt wird. Da der Heckdeckel zum Freigeben des Verdeckkastens ohnehin angehoben werden muss, wird aufgrund der Anbindung des Hutablagedeckels auch dieser in einer gemeinsamen Schwenkbewegung mit dem Heckdeckel aus seiner in den Fahrzeuginnenraum hineinragenden, horizontalen Position herausgehoben, wobei für diese Bewegung des Hutablagedeckels keine zusätzliche Stellkinematik erforderlich ist. Außerdem besteht keine zwingend erforderliche Kopplung zwischen dem Hutablagedeckel und einem Fahrzeugdachteil, was insbesondere die Ablagebewegung vereinfacht und das Stauvolumen im Verdeckkasten reduziert.

Zum anderen wird durch die Aufstellbewegung der Heckscheibe die Möglichkeit eröffnet, das Stauvolumen in der Ablageposition weiter zu reduzieren. Da die Heckscheibe aus ihrer Position zwischen den seitlichen C-Säulen im hinteren Dachteil herausgehoben wird, können die C-Säulen in den seitlichen Abschnitten im Verdeckkasten unten liegend abgelegt werden, wohingegen der Raum zwischen den abgelegten seitlichen C-Säulen entweder frei bleibt, wodurch ein größeres, frei nutzbares Kofferraumvolumen zur Verfügung steht, oder mit sonstigen Dachteilen aufgefüllt werden kann, ohne das Problem einer nach unten gerichteten Wölbung der Heckscheibe berücksichtigen zu müssen. Beispielsweise wird die Heckscheibe in eine parallele Position oberhalb des davor liegenden Dachteiles verbracht und gemeinsam mit diesem Dachteil in den Verdeckkasten abgesenkt, wobei zweckmäßig die Orientierung mit der Dachaußenseite nach oben beibehalten wird (gleichsinnige Ablage). Die Heckscheibe bildet mit dem davor liegenden Dachteil ein übereinander liegendes, gemeinsam zu verstauendes Dachteilpaket.

Dies lässt sich insbesondere vorteilhaft bei dreiteiligen Hardtop-Fahrzeugdächern anwenden, indem die Heckscheibe in eine Position unmittelbar oberhalb des mittleren Dachteils verbracht und das vordere Dachteil über die Heckscheibe verschwenkt wird, so dass in diesem Dachteilpaket das vordere Dachteil zuoberst, die Heckscheibe in der Mitte und das mittlere Dachteil zuunterst mit jeweils gleichsinniger Orientierung abgelegt sind. Diese Orientierung wird vorteilhaft auch im Verdeckkasten beibehalten. Die C-Säulen sowie gegebenenfalls ein oberer, die seitlichen C-Säulen verbindender Querrahmen im hinteren Dachteil liegen zweckmäßig zuunterst im Verdeckkasten, unmittelbar unterhalb des Dachteilpaketes mit vorderem und mittlerem Dachteil und zwischen liegender Heckscheibe. Vorderes und mittleres Dachteil und Heckscheibe sind jeweils gleichsinnig orientiert und weisen mit den Dachaußenseiten nach oben, wohingegen die C-Säulen zweckmäßig gegensinnig abgelegt sind.

Der Hutablagedeckel ist vorteilhaft beweglich und direkt am Heckdeckel gehalten, insbesondere über ein Drehgelenk mit in Querrichtung verlaufender Drehachse schwenkbeweglich gehalten. Diese Schwenkbeweglichkeit ermöglicht eine Relativschwenkbewegung zwischen Hutablagedeckel und Heckdeckel, die zweckmäßig bei geschlossenem Fahrzeugdach zum Öffnen des Kofferraumes zum Tragen kommt, wenn der Hutablagedeckel unter der Heckscheibe hindurch bis in den Fahrzeuginnenraum einragt und der Heckdeckel zum Beladen des Kofferraumes geöffnet werden soll. Um dagegen den Verdeckkasten zum Ablegen des Fahrzeugdaches zu öffnen, ist es grundsätzlich ausreichend, nach dem Aufstellen der Heckscheibe aus der Position zwischen den C-Säulen den Heckdeckel um eine in Querrichtung verlaufende Drehachse am Fahrzeugheck aufzuschwenken und hierbei die Relativposition zwischen Hutablagedeckel und Heckdeckel unverändert beizubehalten, also den Hutablagedeckel in einer gemeinsamen Ebene mit dem Heckdeckel zu belassen. Gegebenenfalls kann aber auch bei dieser Aufschwenkbewegung zum Öffnen des Verdeckkastens der Hutablagedeckel eine Relativschwenkbewegung gegenüber dem Heckdeckel ausführen.

Alternativ zu einer Anbindung des Hutablagedeckels direkt am Heckdeckel kommt auch eine Kopplung zu einem mit dem Heckdeckel verbundenen, weiteren Bauteil in Betracht, beispielsweise einem Trag- bzw. Rohrrahmen, der Träger des Heckdeckels und schwenkbeweglich an die Fahrzeugkarosserie angebunden ist. Bei einer Aufschwenkbewegung des Heckdeckels um die heckseitige Drehachse zum Ablegen und Schließen der Dachteile wird beispielhaft der Heckdeckel einschließlich Tragrahmen aufgeschwenkt, wohingegen zum Öffnen des Kofferraumes der Tragrahmen in seiner Ausgangsposition verbleibt und der Heckdeckel gegenüber dem Tragrahmen angehoben wird.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Ansicht auf ein geschlossenes, dreiteiliges Hardtop-Fahrzeugdach in einem Cabriolet-Fahrzeug, wobei am Heckdeckel ein Hutablagedeckel gehalten ist, der bei geschlossenem Dach unter der Heckscheibe hindurchgeführt ist und in den Fahrzeuginnenraum einragt,
- Fig. 2: eine Ansicht des Fahrzeugdaches zu Beginn der Überführungsbewegung von der Schließposition in die Ablageposition, dargestellt mit aus der Position zwischen den C-Säulen im hinteren Fahrzeugdach angehobener Heckscheibe, die nach vorne über das mittlere Dachteil bewegt wird, wobei zugleich das vordere Dachteil nach hinten ebenfalls über das mittlere Dachteil verstellt wird,
- Fig. 3: das Fahrzeugdach etwa in gleicher Position wie in Fig. 2, jedoch aus anderem Blickwinkel und ohne die C-Säulen dargestellt,
- Fig. 4: das Fahrzeugdach in einer weiter fortgeschrittenen Position während der Ablagebewegung, mit der Heckscheibe unmittelbar oberhalb des mittleren Dachteiles und dem vorderen Dachteil in teilweise über der Heckscheibe angeordneter Lage,

- Fig. 5: das Fahrzeugdach in weiter fortgeschrittener Ablagesituation, in der die Heckscheibe unmittelbar auf dem mittleren Dachteil aufliegt und das vordere Dachteil sich vollständig über dem mittleren Dachteil und der Heckscheibe befindet,
- Fig. 6: das Fahrzeugdach in der Situation wie in Fig. 5, jedoch aus anderer Perspektive, dargestellt mit teilweise angehobenem Heckdeckel zum Freigeben des Verdeckkastens, in den das Fahrzeugdach abgelegt wird,
- Fig. 7: die Situation des Fahrzeugdaches wie in Fig. 5 und 6 dargestellt, jedoch in einer perspektivischen Ansicht schräg von vorne,
- Fig. 8: das Fahrzeugdach in weiter fortgeschrittener Ablagesituation mit vollständig aufgestelltem Heckdeckel,
- Fig. 9: das Fahrzeugdach in noch weiter fortgeschrittener Ablagesituation, in der die Dachteile bereits teilweise in den Verdeckkasten versenkt sind,
- Fig. 10: das vollständig im Verdeckkasten abgelegte Fahrzeugdach mit geschlossenem Heckdeckel,
- Fig. 11: eine schematische Darstellung von Heckdeckel und daran schwenkbar gehaltenem Hutablagedeckel, dargestellt bei geöffnetem Heckdeckel zum Beladen des Kofferraumes,
- Fig. 12: eine weitere Darstellung von Heckdeckel und Hutablagedeckel, jedoch aufgestellt um eine am Fahrzeugheck liegende Schwenkachse zum Öffnen des Verdeckkastens.

In den Figuren sind gleiche Bauteile mit gleichen Bezugszeichen versehen. Die Fahrzeugvorwärtsrichtung ist mit dem Buchstaben F gekennzeichnet.

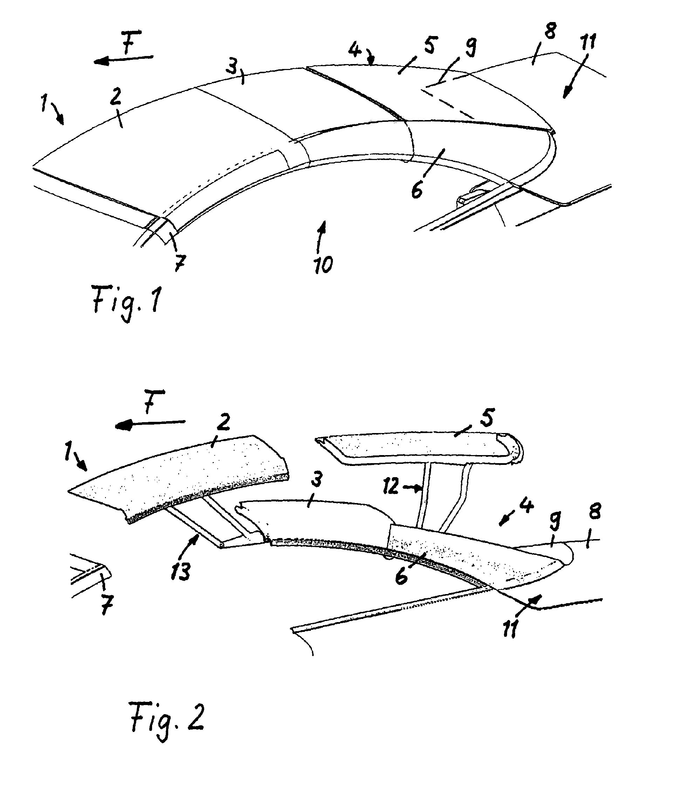

Bei dem in Fig. 1 dargestellten Fahrzeugdach 1 handelt es sich um ein dreiteiliges Hardtop mit drei in sich starren Dachteilen 2, 3 und 4, von denen in Schließposition das vordere Dachteil 2 an einem Windschutzscheibenrahmen 7 angrenzt und das hintere Dachteil 4 sich bis zu einem Heckdeckel 8 erstreckt. Das hintere Dachteil 4 umfasst eine Heckscheibe 5 und seitliche C-Säulen 6, zwischen denen die Heckscheibe 5 in der Schließposition des Daches aufgenommen ist. Am Heckdeckel 8 ist auf der dem Fahrzeuginnenraum 10 zugewandten Seite ein Hutablagedeckel 9 gehalten, der sich bei geschossenem Fahrzeugdach unterhalb des hinteren Dachteiles 4 bis in den Fahrzeuginnenraum 10 hinein erstreckt. In geschlossenem Zustand bilden die Dachteile 2, 3 und 4 eine glatte und nach außen gewölbte Dachaußenhaut.

Das Fahrzeugdach 1 ist aus der gezeigten Schließposition mittels einer Stellkinematik in eine Öffnungs- bzw. Ablagestellung zu überführen, in der die Dachteile in einem von dem Heckdeckel 8 überdeckten Verdeckkasten 11 abgelegt sind und der Fahrzeuginnenraum 10 nach oben offen ist. Der Verdeckkasten 11 ist zweckmäßig Bestandteil des Kofferraumes, wobei gegebenenfalls auch eine vom Kofferraum getrennte Ausführung in Betracht kommt. Die Stellkinematik zur Überführung des Fahrzeugdaches zwischen Schließ- und Ablageposition umfasst verschiedene Kinematikeinheiten, über die die Dachteile verstellbar an die Fahrzeugkarosserie bzw. die Dachteile untereinander schwenkbar gekoppelt sind. Im Ausführungsbeispiel bildet die Stellkinematik eine kinematische Kette, in der das hintere Dachteil 4 schwenkbar an die Fahrzeugkarosserie, das mittlere Dachteil 3 verstellbar am hinteren Dachteil und das vordere Dachteil 2 verstellbar am mittleren Dachteil gehalten ist.

Wie Fig. 2 zu entnehmen, ist die Heckscheibe 5 über eine Verstelleinrichtung 12 verstellbar am hinteren Dachteil 4 gehalten, wobei die Verstelleinrichtung 12 beispielhaft als Viergelenkkinematik ausgeführt ist. Bei einer Betätigung der Verstelleinrichtung 12 wird die Heckscheibe 5 aus ihrer regulären Schließposition zwischen den seitlichen C-Säulen 6 des hinteren Dachteiles 4 in eine aus den C-Säulen heraus gehobene, aufgestellte Aufstellposition verschwenkt, in der die Heckscheibe 5 sich oberhalb der C-Säulen 6 befindet. Hierdurch wird der Raum zwischen den C-Säulen 6 freigegeben, was eine kollisionsfreie Anhebung des Heckdeckels 8 um eine am Fahrzeugheck befindliche, in Querrichtung verlaufende Schwenkachse einschließlich des bei geschlossenem Fahrzeugdach unterhalb der Heckscheibe befindlichen Hutablagedeckels 9 ermöglicht. Die Aufstellbewegung der Heckscheibe 5 in Bezug auf die C-Säulen 6 erlaubt somit das Öffnen von Heckdeckel 8 und Hutablagedeckel 9 zum Freigeben des Verdeckkastens 11.

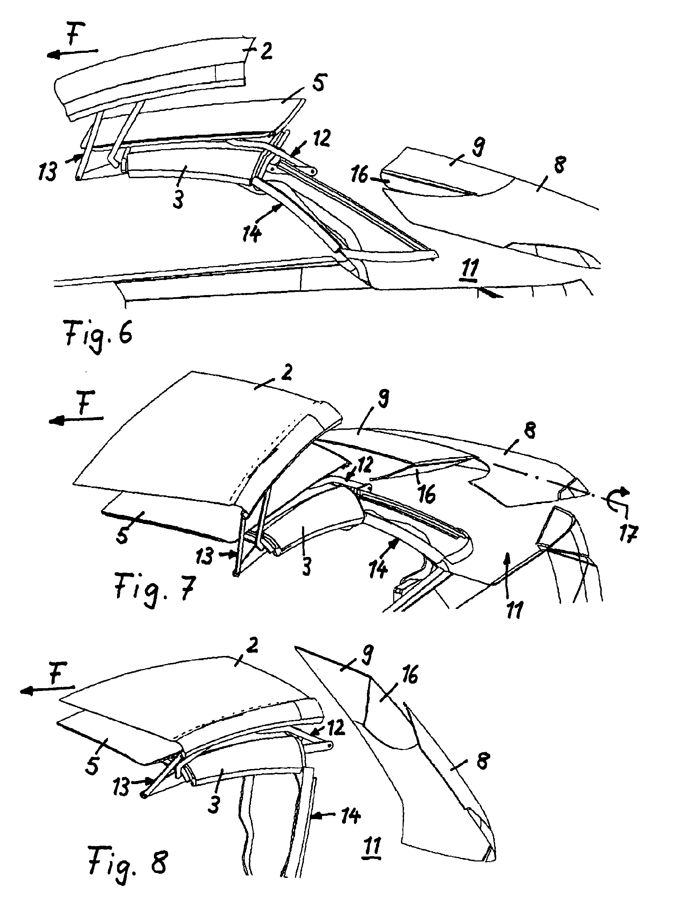

Bei der Überführungsbewegung des Fahrzeugdaches 1 von Schließ- in die Ablage- bzw. Öffnungsstellung wird, wie in den Figuren 2 bis 9 dargestellt, zunächst die Heckscheibe 5 durch Betätigung ihrer Verstelleinrichtung 12, die an Bauteilen des hinteren Dachteiles 4 gehalten ist, in die Aufstellposition oberhalb der seitlichen C-Säulen 6 verstellt, wobei diese Aufstellbewegung zugleich mit einer translatorischen Verstellbewegung nach vorne in eine Position oberhalb des mittleren Dachteiles 3 verbunden ist. Hierdurch wird der Bereich zwischen den seitlichen C-Säulen 6 freigegeben, so dass der Heckdeckel 8 einschließlich Hutablagedeckel 9 um die heckseitige Schwenkachse aufgestellt werden kann. Um ein übereinander liegendes, gleichsinnig orientiertes Dachteilpaket zu erhalten, bestehend aus vorderem Dachteil 2, Heckscheibe 5 und mittlerem Dachteil 3, wird zum einen die Heckscheibe 5 nach vorne in eine Position unmittelbar oberhalb und parallel zum mittleren Dachteil 3 verstellt, zum anderen wird das vordere Dachteil 2 durch Betätigung einer Kinematikeinheit 13 nach hinten in eine Position unmittelbar oberhalb der Heckscheibe 5 und parallel zu dieser verstellt. Über die Kinematikeinheit 13, die beispielhaft als Viergelenkkinematik ausgeführt ist, ist das vordere Dachteil 2 verstellbar am mittleren Dachteil 3 gehalten. Dieses übereinander liegende Dachteilpaket mit vorderem Dachteil 2 zuoberst, Heckscheibe 5 in der Mitte und mittlerem Dachteil 3 zuunterst ist in den Figuren 2 bis 4 in fortschreitenden Zwischenstadien gezeigt und in den Figuren 5 bis 10 im endgültigen Stadium dargestellt.

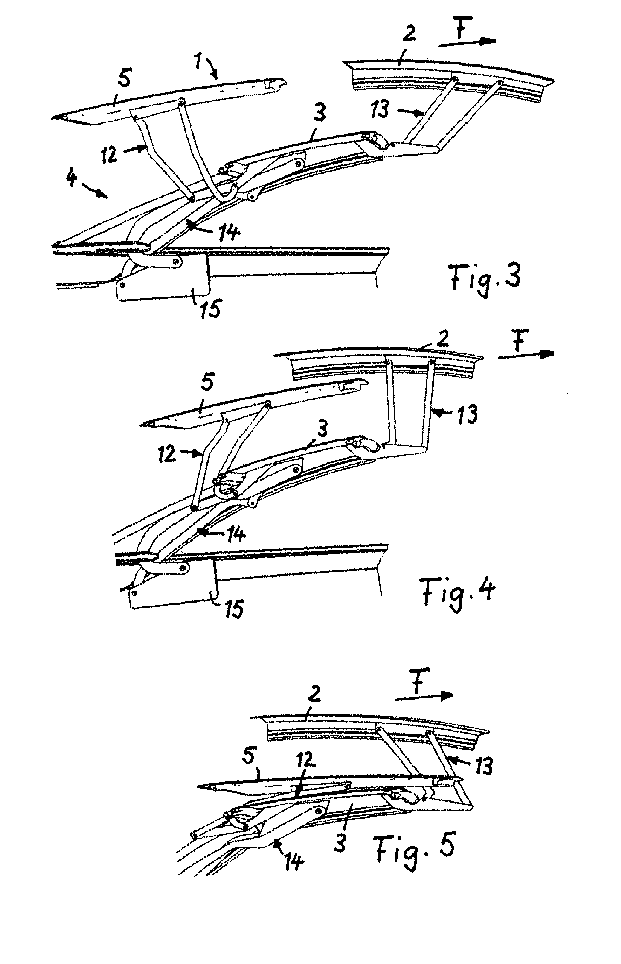

Wie den Darstellungen nach den Figuren 3 bis 8 mit entfernter C-Säulenverkleidung zu entnehmen, ist das hintere Dachteil 4 über eine Kinematikeinrichtung 14, die Bestandteil der Stellkinematik des Fahrzeugdaches ist, an die Fahrzeugkarosserie verstellbar angebunden. Die Lenker der Kinematikeinrichtung 14 sind schwenkbar an einer karosseriefesten Konsole 15 gehalten, die gegebenenfalls aber auch eine Relativstellbewegung gegenüber der Fahrzeugkarosserie ausführen kann. Bei einer Betätigung der Kinematikeinrichtung 14 werden die C-Säulen und gegebenenfalls mit den C-Säulen zusammenhängende Bauteile mit Ausnahme der Heckscheibe 5 um eine Querachse nach hinten in den Verdeckkasten hinein verschwenkt, so dass die C-Säulen mit ihrer Außenseite nach unten im Verdeckkasten abgelegt sind. Die C-Säulen nehmen hierbei eine zu dem Dachteilpaket, bestehend aus vorderem Dachteil 2, Heckscheibe 5 und mittlerem Dachteil 3, entgegengerichtete Orientierung ein.

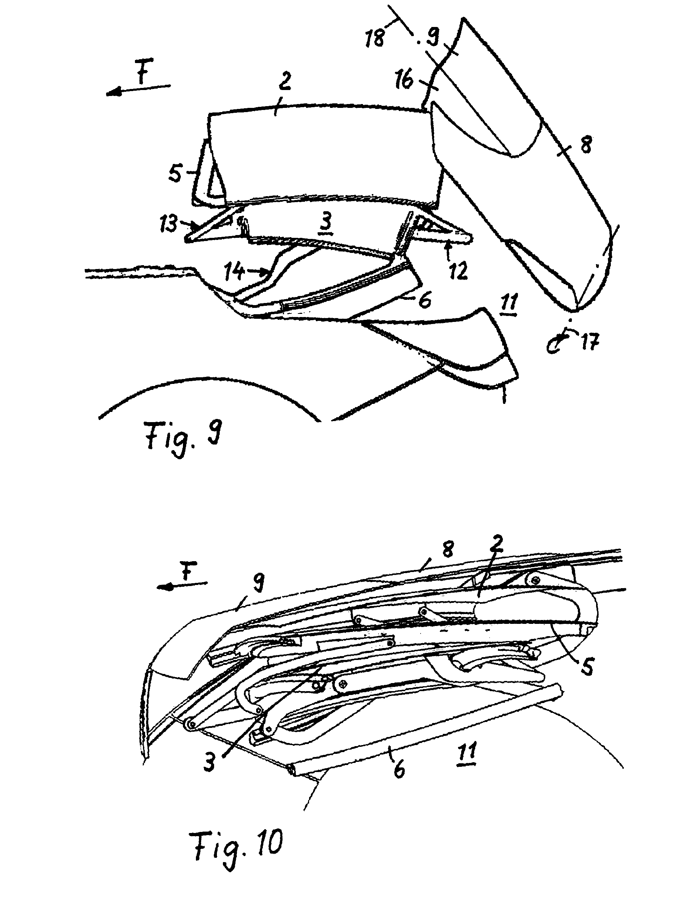

In den Figuren 7 und 9 ist die hintere, direkt am Fahrzeugheck in Querrichtung verlaufende Drehachse 17 für den Heckdeckel 8 eingezeichnet, um die der Heckdeckel 8 zum Freigeben des Verdeckkastens 11 mitsamt dem Hutablagedeckel 9 aufgeschwenkt wird. Diese Drehachse 17 ist Bestandteil eines heckseitigen Drehgelenks, das jedoch gelöst werden kann, um die Heckkante des Heckdeckels 8 zum Öffnen des Kofferraumes anzuheben.

Wie den Figuren 6 bis 10 zu entnehmen, sind im Seitenbereich des Hutablagedeckels 9 jeweils Seitenklappen 16 verschwenkbar am Hutablagedeckel gehalten. Diese Seitenklappen 16 können um eine näherungsweise in Fahrzeuglängsrichtung verlaufende Drehachse 18 gegenüber dem Hutablagedeckel 9 zwischen einer nach unten eingeklappten Position, in der die Seitenklappen 16 unterhalb des Hutablagedeckels liegen, und einer aufgeklappten Position verstellt werden, in der die Seitenklappen 16 in einer gemeinsamen Ebene mit dem Hutablagedeckel liegen. Diese Seitenklappen 16 sind bei geschlossenem Fahrzeugdach eingeklappt, bei geöffnetem Fahrzeugdach dagegen ausgeklappt, um die Bereiche in der Fahrzeugkarosserie abzudecken, aus denen bei geschlossenem Dach die Stellkinematik für das Dach austritt.

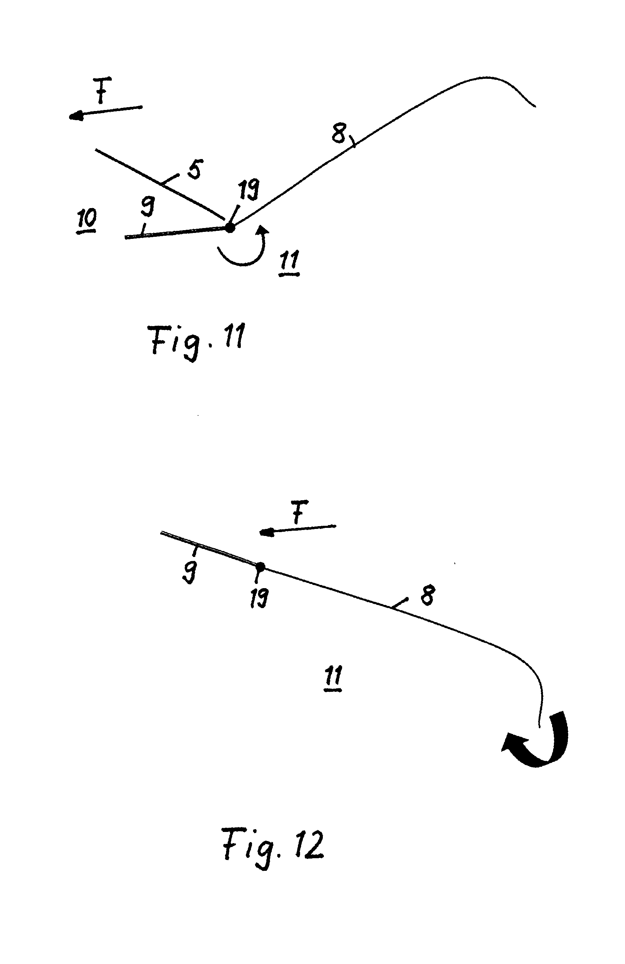

In den Figuren 11 und 12 ist der Heckdeckel 8 einschließlich Hutablagedeckel 9 in verschiedenen Situationen dargestellt. Gemäß Fig. 11 befindet sich das Fahrzeugdach in geschlossener Position, in der die Heckscheibe 5 zu erkennen ist, unterhalb der sich der Hutablagedeckel 9 etwa horizontal in Richtung Fahrzeuginnenraum erstreckt. Zum Öffnen des Kofferraumes wird die heckseitige Verriegelung des Heckdeckels 8 gelöst und der Heckdeckel um das Drehgelenk 19 aufgeschwenkt, welches den Hutablagedeckel 9 mit dem Heckdeckel 8 schwenkbar verbindet. Dieses Drehgelenk 19 ist zweckmäßig in Schließposition des Daches karosserieseitig abgestützt. Die Drehachse 18 des Drehgelenks 19 ist in den Figuren 7 und 9 eingezeichnet.

Gemäß Fig. 12 wird der Heckdeckel 8 zum Ablegen bzw. Herausheben des Fahrzeugdaches in den bzw. aus dem Verdeckkasten 11 um das heckseitige Drehgelenk (Drehachse 17, Fig. 7 und 9) aufgeschwenkt. Der Hutablagedeckel 9 bleibt während dieser Aufschwenkbewegung in einer gemeinsamen Ebene mit dem Heckdeckel 8.

### Bezugszeichenliste

- 1: Fahrzeugdach
- 2: vorderes Dachteil
- 3: mittleres Dachteil
- 4: hinteres Dachteil
- 5: Heckscheibe
- 6: C-Säulen
- 7: Windschutzscheibenrahmen
- 8: Heckdeckel
- 9: Hutablagedeckel
- 10: Fahrzeuginnenraum
- 11: Verdeckkasten
- 12: Verstelleinrichtung
- 13: Kinematikeinheit
- 14: Kinematikeinrichtung
- 15: Konsole
- 16: Seitenklappe
- 17: Drehachse
- 18: Drehachse
- 19: Drehgelenk

## Patentansprüche

1. Cabriolet-Fahrzeug mit einem zwischen einer Schließposition und einer Ablageposition verstellbaren Hardtop-Fahrzeugdach (1) mit mehreren Dachteilen(2, 3, 4), von denen ein hinteres Dachteil (4) eine Heckscheibe (5) zwischen seitlichen C-Säulen (6) umfasst, die als ein unabhängig von dem hinteren Dachteil (4) bewegbares Bauteil ausgebildet ist und mithilfe einer Verstelleinrichtung (12) in eine gegenüber der Ebene des hinteren Dachteils (4) versetzte Aufstellposition . überführbar ist, wobei in der Ablageposition das Fahrzeugdach (1) in einem heckseitigen Verdeckkasten (11) abgelegt ist, der von einem aufschwenkbaren Heckdeckel (8) zu verschließen ist,
**dadurch gekennzeichnet,**
**dass** am Heckdeckel (8) oder einem mit dem Heckdeckel gekoppelten Bauteil auf der dem Fahrzeuginnenraum (10) zugewandten Seite ein Hutablagedeckel (9) gehalten ist, der sich in Schließposition bis in den von dem Fahrzeugdach (1) überspannten Fahrzeuginnenraum (10) erstreckt.

2. Cabriolet-Fahrzeug nach Anspruch 1,
**dadurch gekennzeichnet,**
**dass** der Hutablagedeckel (9) unmittelbar und beweglich am Heckdeckel (8) gehalten ist.

3. Cabriolet-Fahrzeug nach Anspruch 2,
**dadurch gekennzeichnet,**
**dass** der Hutablagedeckel (9) schwenkbeweglich am Heckdeckel (8) gehalten ist.

4. Cabriolet-Fahrzeug nach einem der Ansprüche 1 bis 3,
**dadurch gekennzeichnet,**
**dass** der Heckdeckel (8) zum Öffnen des Kofferraumes um ein Drehgelenk (19) aufschwenkbar ist, das im Übergang zwischen Heckdeckel (8) und Hutablagedeckel (9) angeordnet ist.

5. Cabriolet-Fahrzeug nach einem der Ansprüche 1 bis 4,
**dadurch gekennzeichnet,**
**dass** die Heckscheibe (5) zumindest während der Überführungsbewegung des Daches (1) zwischen Schließ- und Ablageposition in die gegenüber der Ebene des hinteren Dachteils (4) versetzte Aufstellposition zu verstellen ist.

6. Cabriolet-Fahrzeug nach einem der Ansprüche 1 bis 5,
**dadurch gekennzeichnet,**
**dass** die Heckscheibe (5) in Ablageposition des Daches (1) sich in der Aufstellposition befindet.

7. Cabriolet-Fahrzeug nach einem der Ansprüche 1 bis 6,
**dadurch gekennzeichnet,**
**dass** die Heckscheibe (5) in Aufstellposition oberhalb und parallel zu dem vor dem hinteren Dachteil (4) liegenden Dachteil (3) liegt.

8. Cabriolet-Fahrzeug nach einem der Ansprüche 1 bis 7,
**dadurch gekennzeichnet,**
**dass** der Hutablagedeckel (9) an einem Tragrahmen gehalten ist, der Träger des Heckdeckels (8) ist.

9. Cabriolet-Fahrzeug nach einem der Ansprüche 1 bis 8,
**dadurch gekennzeichnet,**
**dass** das Hardtop-Fahrzeugdach (1) insgesamt drei starre Dachteile (2, 3, 4) umfasst und die Heckscheibe (5) in der Aufstellposition zwischen dem vorderen und dem mittleren Dachteil (2 bzw. 3) liegt.

10. Cabriolet-Fahrzeug nach Anspruch 9,
**dadurch gekennzeichnet,**
**dass** die Dachteile (2, 3, 4) ein übereinander liegendes Dachteilpaket bilden, bei dem das vordere Dachteil (2) zuoberst und die Heckscheibe (5) direkt unter dem vorderen Dachteil (2) liegt.

11. Cabriolet-Fahrzeug nach einem der Ansprüche 1 bis 10,
**dadurch gekennzeichnet,**
**dass** bei der Überführung des Daches (1) von Schließ- in Ablageposition in einer ersten Bewegungsphase die Heckscheibe (5) in die Aufstellposition überführbar und in einer sich daran anschließenden, zweiten Bewegungsphase die Dachteile (2, 3, 4) einschließlich der aufgestellten Heckscheibe (5) in den Verdeckkasten (11) überführbar sind.
